# EUROPÄISCHE PATENTSCHRIFT

(11) **EP 2 527 087 B1**
(45) Veröffentlichungstag und Bekanntmachung des Hinweises auf die Patenterteilung: **23.09.2015**
(21) Anmeldenummer: 12158571.5
(22) Anmeldetag: 08.03.2012
(51) Int. Cl.: B24B 3/36, A01F 29/22, A01D 43/08

(54) **Feldhäcksler mit einer Einrichtung zur Schneidschärfeerkennung**
Forage harvester with device for detecting cutting sharpness
Ramasseuse-hacheuse et agencement de détection de son aiguisement de coupe

(30) Priorität: 21.05.2011 DE 102011102172; 30.11.2011 DE 102011055851
(43) Veröffentlichungstag der Anmeldung: 28.11.2012
(73) Patentinhaber: CLAAS Saulgau GmbH, 88348 Bad Saulgau (DE)
(72) Erfinder: Rauch, Hans, 88348 Bad Saulgau (DE); Loebe, Stefan, 88348 Bad Saulgau (DE); Schulze, Klaus, 01844 Neustadt (DE)

(56) Entgegenhaltungen:
- EP-A1- 1 034 892
- EP-A1- 2 329 705
- DD-A5- 286 737
- DE-A1- 4 023 113
- DE-A1-102009 029 675
- DE-C1- 19 903 153

## Beschreibung

Die Erfindung betrifft ein Verfahren und eine Vorrichtung zur Erfassung der Schneidschärfe der Häckselmesser eines Häckselaggregats eines Feldhäckslers nach den Ansprüchen 1 und 8.

### Stand der Technik

Aus DE 40 23 113 A1 ist ein Verfahren zum Feststellen der Schärfe von Häckselmessern bekannt, bei welchem vorgesehen ist, bei rotierender Häckseleinrichtung den Anteil der in der Schneidebene liegenden Häckselmesserflächen an der Gesamtrotationsfläche berührungsfrei bei scharfen Häckselmessern zu ermitteln sowie abzuspeichern und im Betrieb der Häckseleinrichtung diesen Anteil erneut zu ermitteln, mit dem abgespeicherten Anteil zu vergleichen und bei Unterschreitung eines festgelegten Grenzwertes ein Signal zum Nachschleifen auszulösen.

Die DE 10 2009 029 675 A1 offenbart eine Einrichtung zur Bestimmung der Schärfe von gegenüber einer Gegenschneide bewegbaren Häckselmessern. Diese umfasst einen Sensor, der die wirkenden Schnittkräfte direkt oder indirekt erfasst und eine mit dem Sensor verbundene Auswertungseinrichtung. Die Auswertungseinrichtung integriert die Messwerte des Sensors über die Zeit, um eine Information hinsichtlich der Schärfe der Häckselmesser zu generieren. Der Grundgedanke dieser Offenbarung liegt darin, dass der Messerverschleiß mit dem zeitlichen Integral der Schnittkräfte bzw. der Schnittenergie korreliert. Deshalb wird eine von den beim Zerhacken des Ernteguts wirkenden Schnittkräften abhängige Größe durch einen Sensor gemessen und ein von der erfassten Größe abhängiges Signal durch eine Auswertungseinrichtung zeitlich integriert, um eine Information hinsichtlich der Schärfe der Häckselmesser zu erzeugen.

Die Schnittkräfte an einer rotierenden Häckseltrommel bei stark unterschiedlichen Belastungen wegen der ständigen Schwankungen des Massendurchsatzes mit hinreichender Genauigkeit zu erfassen, ist ein sehr schwieriges Unterfangen. Die der Erfindung zugrunde liegende Aufgabenstellung hat sich daher von dieser Vorstellung der direkten oder indirekten Erfassung der Schnittkräfte gelöst um nach einer neuen Lösung zu suchen, die Schärfe der Schneidkanten der Häckselmesser zu erfassen und auszuwerten.

### Aufgabenstellung

Hier setzt die Aufgabe der Erfindung an mit dem Ziel, ein einfaches und zuverlässiges Verfahren mit der dazugehörigen Vorrichtung zur Erfassung der Schneidschärfe der Schneidkanten von Häckselmessern einer Häckseltrommel einer landwirtschaftlichen Erntemaschine vorzuschlagen, um mit der Erntemaschine möglichst energieeftizient zu arbeiten.

### Lösung der Aufgabe

Gelöst wird die Aufgabe der Erfindung mit den kennzeichnenden Merkmalen der unabhängigen Ansprüche 1 und 8. Weitere vorteilhafte Ausgestaltungen der Erfindung sind den abhängigen Ansprüchen, der Beschreibung und den Figurendarstellungen zu entnehmen.

Gemäß dem Anspruch 1 wird vorgeschlagen, dass durch wenigstens eine als Elektrode als Kontaktsensor eine hinter der Schneidkante befindliche Messerfläche zumindest eines Häckselmessers abgetastet und die Kontaktdauer der wenigstens einen Elektrode mit der Messerfläche erfasst wird. Aus der erfassten Kontaktdauer der wenigstens einen Elektrode mit der Messerfläche lässt sich auf deren Messerschärfe schließen, da sich die erfassbare Kontaktdauer entsprechend dem im Betrieb der Häckselmesser auftretenden Verschleiß an der der Messerfläche reduziert, was Rückschlüsse auf die Schärfe der Häckselmesser zulässt. Eine abscherende Schneidvorrichtung, bestehend aus einem Messer mit Schneidkante und einer Gegenschneide und mit einem optimalem Schneidspalt ist geometrisch so gestaltet, dass bedingt durch die Schleifvorgänge, die Messerfläche hinter der Schneidkante die gleiche Winkelausrichtung hat, wie die Bewegungsrichtung des Messers selbst. Bei einer rotierenden Schneidvorrichtung ist dies der Radius der Schneidtrommel. Ein scharf geschliffenes Messer, mit einem minimalen Radius der vorderen Schneidkante, hat somit die größtmögliche gerade Messerfläche. Wird die Schneidkante, sowie auch der Messerrücken, infolge von Schneidvorgängen abgearbeitet, so verkürzt sich der gerade Anteil der Messerfläche, da durch den Abrieb die Messerfläche gerundet wird. Durch das gezielte Heranführen des Kontaktsensors an diese Messerfläche kann der gerade Anteil dieser Messerfläche bestimmt werden. Dies geschieht durch die Auswertung der Länge der Kontaktzeit.

Vorteilhafterweise kann die wenigstens eine Elektrode in axialer Richtung der Häckseltrommel bewegt werden, um eine ganzheitliche Abtastung der Schneidkante der Häckselmesser zu erreichen.

Insbesondere können die wenigstens eine Elektrode und die Häckselmesser an eine Stromquelle angelegt werden und einen Stromkreis bilden, der für die Dauer eines Kontaktes eines Häckselmessers mit der Elektrode geschlossen wird. Bei dieser Variante bilden die wenigstens eine Elektrode und das Häckselmesser den Schalter, der den Stromkreis für die Dauer des Kontaktes schließt.

Um die Einflüsse der Messergeschwindigkeit zu kompensieren, muss diese Geschwindigkeit bekannt sein oder mit einer geeigneten Vorrichtung ermittelt werden. Durch den Vergleich der geschwindigkeitskompensierten Messerflächen zwischen dem Wert für scharf und dem gemessenen Istwert, kann der Schärfezustand der Schneidkanten ermittelt werden.

Der dazu notwendige Wert für den Zustand eines scharfen Messers wird direkt nach einem Schleifvorgang gemessen und als Vergleichswert hinterlegt. Häckselmesser sind meist so geformt, dass diese eine keilförmige Geometrie aufweisen. Dadurch ist der Vergleichswert für den Zustand scharf nicht konstant, sondern wird sich durch erfolgte Schleifvorgänge stetig leicht erhöhen. Es wird somit nach jedem Schleifvorgang dieser Vergleichswert neu ermittelt und hinterlegt.

In bestimmten Intervallen wird innerhalb der Arbeitszeit der Schneideinrichtung der Messvorgang zur Ermittlung der Ist-Messerfläche eingeleitet und ausgewertet. Es wird sich als Ergebnis ein immer kleiner werdender Wert für die Kontaktdauer mit der Messerfläche ergeben. Durch vorher ermittelte Vergleichswerte kann der Schärfezustand der Schneidkante bestimmt und dem Bediener mitgeteilt werden.

Ist bei einer rotierenden Schneideinrichtung die Anzahl der Messer auf der Schneidtrommel bekannt, so kann durch eine zusätzliche Information des Drehwinkels der Schneidtrommel zur Messerposition der Schärfezustand jedem einzelnen Messer zugeordnet werden.

Wird weiterhin der elektrische Kontakt während der Messung über die Breite der Schneidtrommel bewegt und die entsprechende Breitenposition ermittelt, so lässt sich ein komplettes dreidimensionales Abbild des Schärfezustandes der gesamten Schneidtrommel bestimmen.

Sind auf der Schneidtrommel die Messer schräg angestellt, so kann durch die Kenntnis der Breitenposition diese Schrägstellung bei der Messung kompensiert werden.

Der Kontaktsensor in Form einer Elektrode muss zur Bestimmung der geraden Messerfläche eine direkte Berührung zu dieser haben. Dies erfordert eine genaue Positionierung dieser Elektrode. Vorteilhafterweise kann dieser elektrische Kontakt an der Schleifeinrichtung für die Messer angeordnet sein. Bei Wahl eines geeigneten Kontaktwerkstoffes für die Elektrode kann diese direkt im Schleifstein eingebracht sein. Somit hat die Elektrode stets den korrekten Abstand zu den Schneidflächen und eine separate mechanische Halte- und Nachjustiervorrichtung für die Elektrode könnte entfallen.

Bei der Integration der Elektrode in den Schleifstein kann durch Nutzung der Schleifvorrichtung ohne weiteren mechanischen Aufwand die gesamte Messerbreite der Schneidtrommel erfasst werden. Lediglich eine Information zur aktuellen Position der Elektrode muss verfügbar sein. Dies kann zum Beispiel durch einen Wegsensor, oder durch eine zeitliche Zuordnung der Schleifbewegung erfolgen.

Bei der Verwendung nur einer Elektrode wird der Stromkreis, wie weiter oben ausgeführt, durch den Kontakt mit dem jeweiligen Häckselmesser zeitweise geschlossen. Hierzu kann die rotierende Häckseltrommel über einen Schleifringkontakt an der Spannungsquelle des Stromkreises anliegen.

In einer weiteren Ausgestaltung der Erfindung soll darauf verzichtet werden, die Häckseltrommel als Ganzes in den Stromkreislauf mit einzubeziehen, um damit auf den dann erforderlichen Schleifringkontakt verzichten zu können und vor allem, um der Messtechnik eine große Robustheit gegen äußere Störeinflüsse zu verleihen. In dieser weiteren Ausgestaltung befinden sich in oder an dem Schleifstein wenigstens zwei Elektroden, die dort angeordnet sind und zwar eine vorlaufende und eine nachlaufende Elektrode, und in einer weiteren Ausgestaltung der Erfindung dritte, zentrale Elektrode sowie eine dazu beabstandete vorlaufende und nachlaufende Elektrode, die ebenfalls an oder in dem Schleifstein angeordnet sind. Diese Elektroden nehmen grundsätzlich am abrasiven Prozess des Nachschleifens teil.

In der Ausführung mit drei Elektroden liegt an der zentralen Elektrode immer ein elektrisches Spannungspotential an. Befinden sich die Häckselmesser im voll geschärften Zustand, so liegen bei der umlaufenden Häckseltrommel, sobald ein Häckselmesser den Schleifstein kontaktiert, alle drei Elektroden momentan an der geschliffenen Messerfläche des Häckselmessers an. Da aufgrund der Umlaufbewegung sich dieser Vorgang im Millisekundenbereich abspielt, fungieren die Häckselmesser als Schließkontakt und zwar dem Wesen nach als Wischkontakte zwischen der stromführenden zentralen Elektrode und der vorlaufenden beziehungsweise der nachlaufenden Elektrode.

Sind beide Wischkontakte, d.h. die der vorlaufenden und die der nachlaufenden Elektrode kurzzeitig geschlossen, so entstehen zwei sich überlagernde Spannungsimpulse, welche als Indikatoren für ein voll geschärftes Messer gedeutet werden können. Da mit zunehmendem Verschleiß die geschliffenen Messerflächen an den Häckselmessern größer und somit breiter werden und damit eine Fehlinterpretation in Bezug auf die Impulslänge der Messwerte in Betracht kommt, wird dieser Fehlinterpretation dadurch entgegen gewirkt, indem die beim letzten Schleifvorgang aufgezeichnete Impulsabfolge und Kontaktdauer in einem Speicher eines µ-Controllers hinterlegt wird, welches einer permanent aktualisierten Referenzierung gleich kommt.

Somit kann festgestellt werden, dass wenigstens ein Kontaktsensor bzw. wenigstens eine Elektrode im Betriebszustand dauerhaft an einer Spannungsquelle anliegt und diese am abrasiven Schleifprozess teilnimmt.

Kontaktieren die Schneidflächen der Häckselmesser im rotierenden Zustand der Häckseltrommel den Schleifstein, so dass jedes vorbeikommende Häckselmesser kurzfristig als Wischerkontakt fungiert und den Stromkreis für die Dauer des Kontakts schließt, so entsteht durch den momentanen Stromfluss ein elektrischer Impuls. Im Ergebnis wird somit für die Zeitdauer des Kontaktes ein Stromfluss generiert, der messtechnisch erfasst wird und der zudem visualisiert dargestellt werden kann. Analog gilt dieses auch für die Kontaktunterbrechung, deren Zeitdauer ebenfalls messtechnisch erfasst wird und der eine Impulsdauer zugeordnet wird, welche in die Auswertung zur Schärfebeurteilung mit einbezogen wird.

Mit den daraus resultierenden Impulsdauern kann in Verbindung mit einem Auswerte-Algorithmus eines µ-Controllers auf die Schneidkantenschärfe der Häckselmesser geschlossen werden. Der Schleifstein mit seiner wenigstens einen Elektrode stellt damit gleichermaßen in seiner Gesamtheit den Sensor zur Erfassung des Schärfezustands der Häckselmesser dar. Somit ist die Messeinrichtung zugleich Bestandteil der Schleifeinrichtung insgesamt, wodurch während des Schleifprozesses alle Häckselmesser der gesamten Häckseltrommel sowohl in ihrer umfänglichen radialen, als auch axialen Erstreckung in Bezug auf Ihre Schärfe überwacht werden.

Als Ergebnis wird der Schärfezustand der gesamten Schneidtrommel messtechnisch in Echtzeit erfasst und in Form von graphischen Symbolen visualisiert. Diese Messeinrichtung wird weiterhin zur automatischen Abschaltung eines Schleifvorganges benutzt, wenn die gewünschte Schärfe erreicht ist.

Der Schleif- bzw. Messvorgang kann manuell gestartet werden, alternativ aber auch bei Rangiermanövern an einem Feldende automatisch ausgelöst werden. Der besondere Vorteil der Erfindung besteht darin, dass der Schleifprozess nicht auf bloßem Verdacht der mangelhaften Schärfe der Häckselmesser, sondern auf der Basis konkreter Messungen beruht. Dieses verlängert die Standzeit des Schleifsteins, aber ebenso die Standzeit der Häckselmesser, welches einen erheblichen Beitrag zur Verbesserung der Wirtschaftlichkeit einer derartigen Erntemaschine darstellt.

Weitere Einzelheiten können dem nachfolgend dargelegten Ausführungsbeispiel entnommen werden. Nachfolgend soll die Erfindung an einem Beispiel näher erläutert werden.

### Ausführungsbeispiel

Es zeigen:

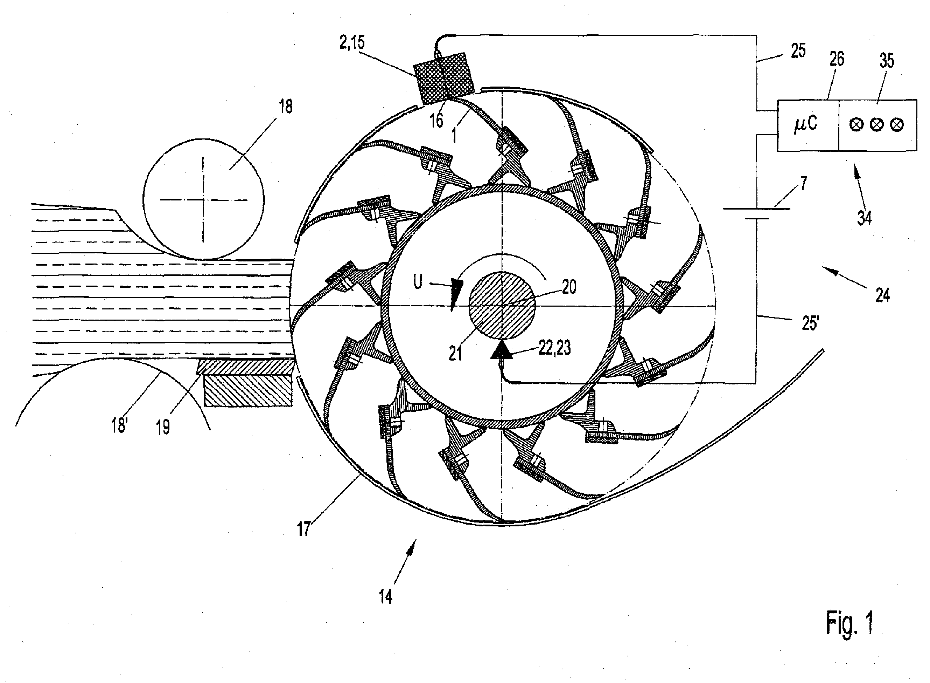

Fig.1 zeigt den prinzipiellen Aufbau einer Häckseltrommel 14 mit ihren Häckselmessern 1 und einer Schleifvorrichtung 15 nach der Erfindung zum Nachschärfen der Schneidkanten 16 der Häckselmesser 1 in einer Querschnittsdarstellung in einer vereinfachten Darstellung. Dem Fachmann ist die Funktion und der Aufbau einer Häckseleinheit eines Feldhäckslers bekannt, so dass an dieser Stelle eine vereinfachte Darstellung zur Erklärung der Erfindung hinreichend ist.

Die Häckseltrommel 14 ist in bekannter Weise in den Seitenwänden des Häckslergehäuses 17 gelagert und sie steht mit dem Motor des selbstfahrenden Feldhäckslers in Antriebsverbindung. Die Umlaufbewegung im Betriebszustand ist durch den Drehrichtungspfeil U gekennzeichnet. Der Häckseltrommel 14 vorgelagert sind in bekannter Weise die Vorpresswalzen 18,18' und die feststehende Gegenschneide 19.

Die Häckseleinheit verfügt über eine Schleifvorrichtung 15 zum Nachschärfen der Häckselmesser 1, welche symbolisch durch einen Schleifstein 2 dargestellt ist. Der Schleifstein 2 kann der Häckseltrommel 14 in radialer Richtung zugestellt werden. Gleichzeitig kann der Schleifstein 2 parallel zur Rotationsachse 20 der Häckseltrommel 14 bewegt werden. An oder in dem Schleifstein 2 zum Nachschärfen der Häckselmesser 1 ist wenigstens eine Kontaktelektrode 3 angeordnet, die als Kontaktsensor 27 zum Abtasten der hinter der Schneidkante 16 befindlichen Messerfläche 5 der Häckselmesser 1 dient. In dem dargestellten Ausführungsbeispiel liegen die Elektrode 3 und die gesamte Häckseltrommel 14 an einer elektrischen Stromquelle 7, beispielsweise ausgebildet als eine elektrisch aufladbare Batterie, mit der Potentialdifferenz V bzw. der elektrischen Spannung V an, die Teil einer Messanordnung 24 sind. Die Welle 21 der Häckseltrommel 14 weist einen Schleifringkörper 22 auf, an dem ein Stromabnehmer 23 anliegt, der den Kontakt zur Häckseltrommel 14 herstellt. Eingebunden in den Aufbau der Messanordnung 24, bestehend aus der Stromquelle 7, den elektrischen Leitungen 25,25', der Elektrode 3, dem Stromabnehmer 23, ist ein µ-Controller 26, wobei der Stromfluss innerhalb des Stromkreises 7 ein Eingangssignal für den µ-Controller 26 darstellt.

Treffen während der Umlaufbewegung der Häckseltrommel 14 beim Nachschärfen die Häckselmesser 1 auf die Elektrode 3, so wird der Stromkreis 7 in diesem Augenblick geschlossen und er bleibt solange geschlossen, wie der Kontakt zwischen der Messerfläche 5 des Häckselmessers 1 und der wenigstens einen Elektrode 3 im Schleifstein 2 vorhanden ist. Das Häckselmesser 1 selber betätigt sich für diesen kurzen Augenblick als Wischerkontakt zum Schließen des Stromkreises 7.

In Fig.2 Ist das Prinzip eines elektrischen Kontaktsensors 27 nach der Erfindung dargestellt und Fig.3 zeigt einen möglichen Verlauf der Schärfeinformation.

Die in Fig.3 dargestellte zeitliche Phase zeigt die Berührung eines Häckselmessers 1 mit dem Schleifstein 2 und der in den Schleifstein 2 integrierten Elektrode 3.

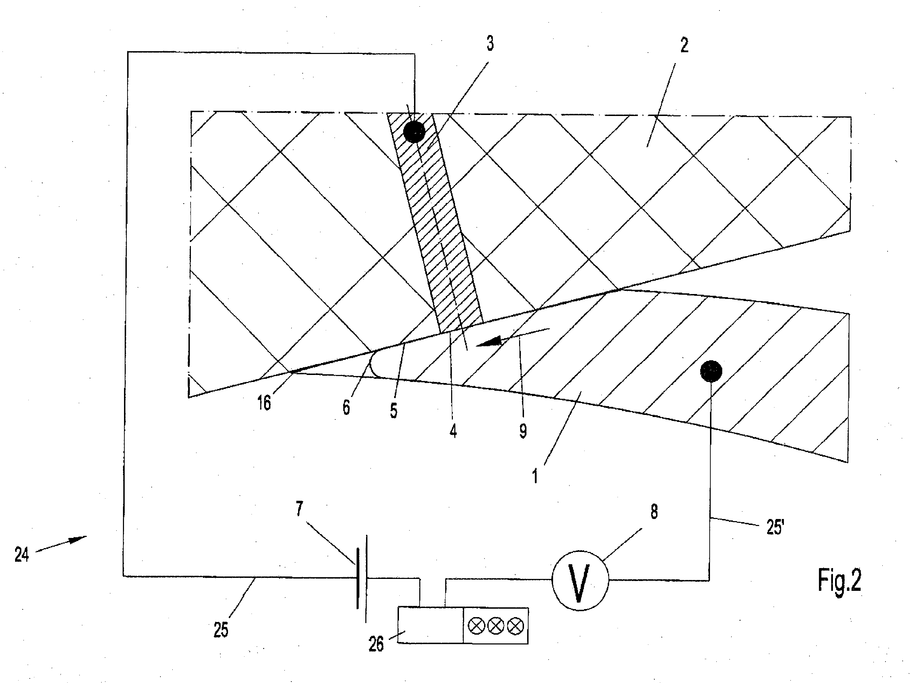

Gemäß der Darstellung in Fig. 2 fließt im Berührungspunkt 4 der geraden Messerfläche 5 mit der Elektrode 3 Ober den an Häckselmesser 1 und Elektrode 3 angeschlossenen Stromkrels 7 ein Strom 12, der In einer geeigneten Auswerteeinheit 34 erfasst wird. Die Auswerteeinheit 34 eliminiert dabei durch geeignete Verfahren ein mögliches Auftreten von Kontaktflattern am Berührungspunkt 4. Weiterhin werden mehrere Messwerte statistisch verarbeitet, um einen zuverlässigen Schärfewert zu erhalten.

Die Messerfläche 5 bewegt sich dabei mit einer Geschwindigkeit in einer Richtung 9, die identisch ist mit der Umlaufbewegung U der Häckseltrommel 14, parallel zu der Elektrode 3 und zu dem Schleifstein 2. Ist das Messer 1 scharf geschliffen, so ist der gerade Anteil der Messerfläche 5 am größten. Die elektrische Verbindung bzw. der Kontakt hat in diesem Fall über eine lange Zeitdauer 10 bestand.

Weist die Schneidkante 16 des Messers 1 Abnutzungserscheinungen auf, so weist die Schneidkante 16 einen größeren Schneidenradius 6 auf. Die Zeitdauer 11 des elektrischen Kontakts im Berührungspunkt 4, der jetzt nur noch auf einem kurzen Stück der Messerfläche 5 hergestellt wird, wird nun wesentlich kleiner sein. Durch einen Vergleich mit der zugehörigen Zeitdauer 10 für ein scharf geschliffenes Häckselmesser 1 lässt sich ein Rückschluss auf die Schärfe ziehen.

Der Messerschärfewert kann dabei als Durchschnitt für die gesamte Häckseltrommel 14 ausgegeben werden, z.B. in Form einer Ampel oder eines Zahlenwertes.

Wenn ein Sensor die Position der Häckseltrommel 14 synchronisiert, also an einer bestimmten Stelle der Häckseltrommel 14 ein Signal abgibt, so lassen sich die Schärfewerte den einzelnen Häckselmessern 1 zuordnen.

Ist zusätzlich noch die Elektrodenposition zu der Trommelbreite bekannt, die zum Beispiel durch einen Wegsensor oder durch eine zeitliche Zuordnung einer Längsbewegung des Schleifsteins 2 gewonnen werden kann, so können die Schärfewerte für die gesamte Häckseltrommel 14 dreidimensional berechnet werden. Weiterhin kann durch Kenntnis der Position der Elektrode 3 die praktisch übliche Schrägstellung der Häckselmesser 1 beim Messvorgang kompensiert werden.

Ist durch vorherige praktische Versuche bekannt, ab welchem Istwert der Zeitdauer 11 ein Häckselmesser 1 als stumpf angesehen wird, also unbedingt nachgeschliffen werden muss, so lässt sich bei Überschreitung dieses Wertes eine Aufforderung zum Schleifen an den Bediener auslösen. Diese Aufforderung wird durch die Auswerteeinheit 34 der Anzeigeeinheit 35 mitgeteilt, deren Information dem Fahrer beispielsweise durch eine grüne, gelbe oder rote Signalanzeige in Form einer Ampel visualisiert wird.

Löst der Bediener dann einen Schärfevorgang aus, so wird während dieser Schleifzyklen mit der im Schleifstein 2 integrierten Elektrode 3 ständig der Schärfewert der Häckselmesser 1 bestimmt. Erkennt die angeschlossene Auswerteeinheit 34 dabei, dass die Häckselmesser 1 den Sollwert für scharfe Messer erreicht haben, so stoppt die Schleifvorrichtung 15 selbständig und verhindert ein unnötiges Abschleifen der Häckselmesser 1.

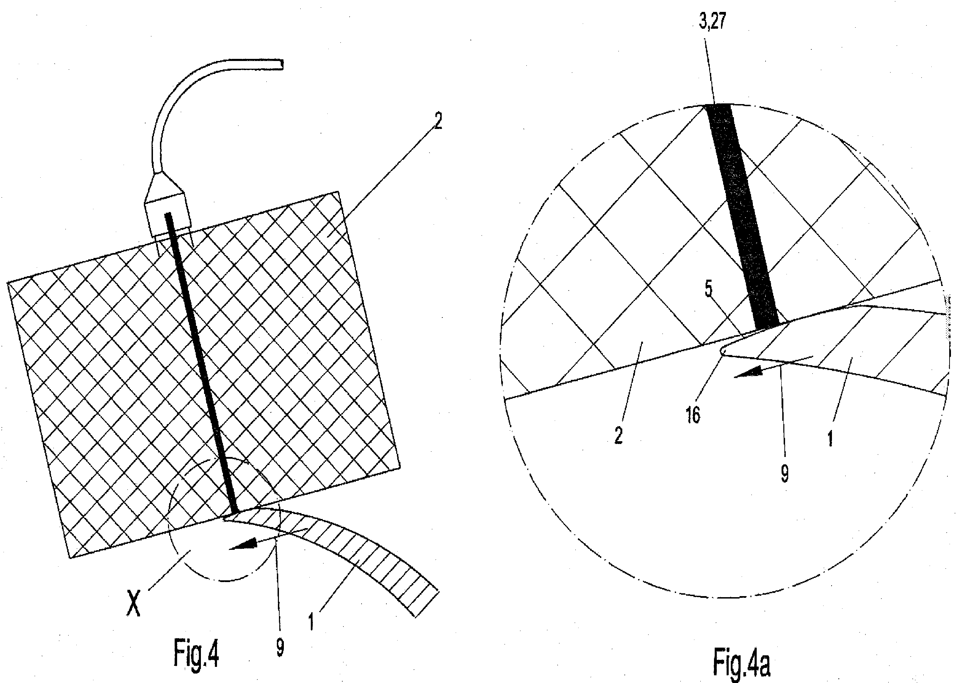

Fig.4 zeigt eine Situation eines Häckselmessers 1 mit einer stark abgenutzten Schneidkante 16 und Fig.4a zeigt die Einzelheit X der Fig.4 In einer vergrößerten Darstellung. Die Messerfläche 5, die ja die Kontaktfläche zur Elektrode 3 darstellt, ist stark gewölbt, so dass es im Falle eines Kontaktes zu einer sehr kurzen Kontaktdauer 11 kommt, wodurch der µ-Controller 26 meldet, dass die Schneidkante 16, bzw. die Häckseltrommel 14 unbedingt nachgeschärft bzw. geschliffen werden muss.

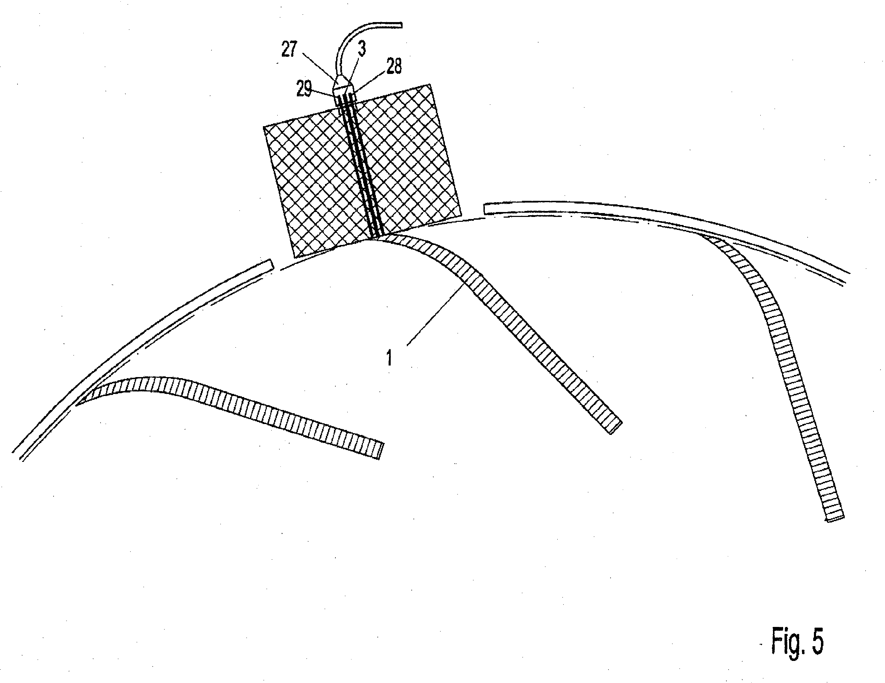

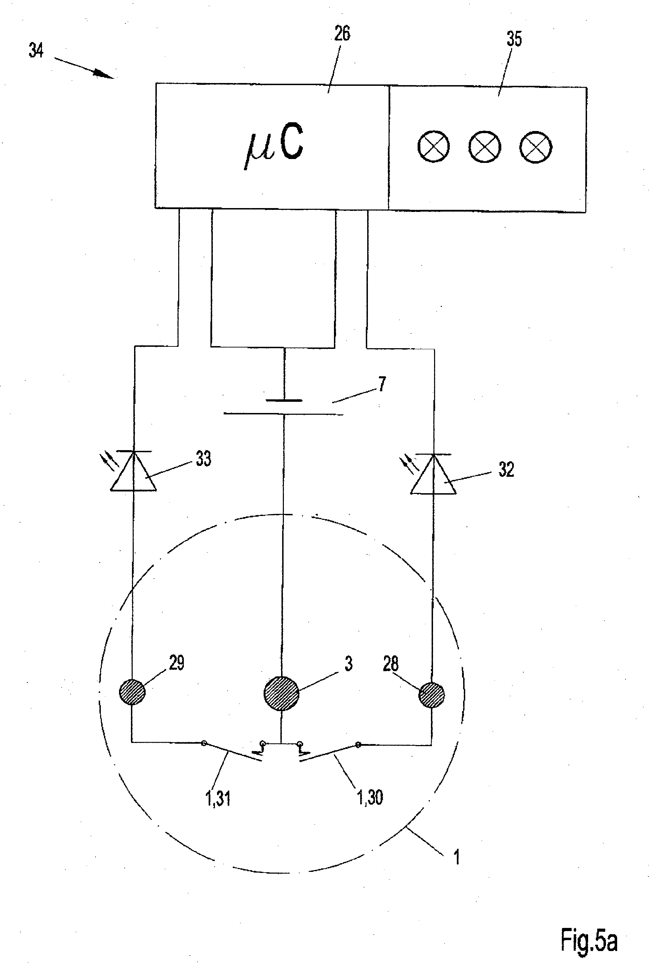

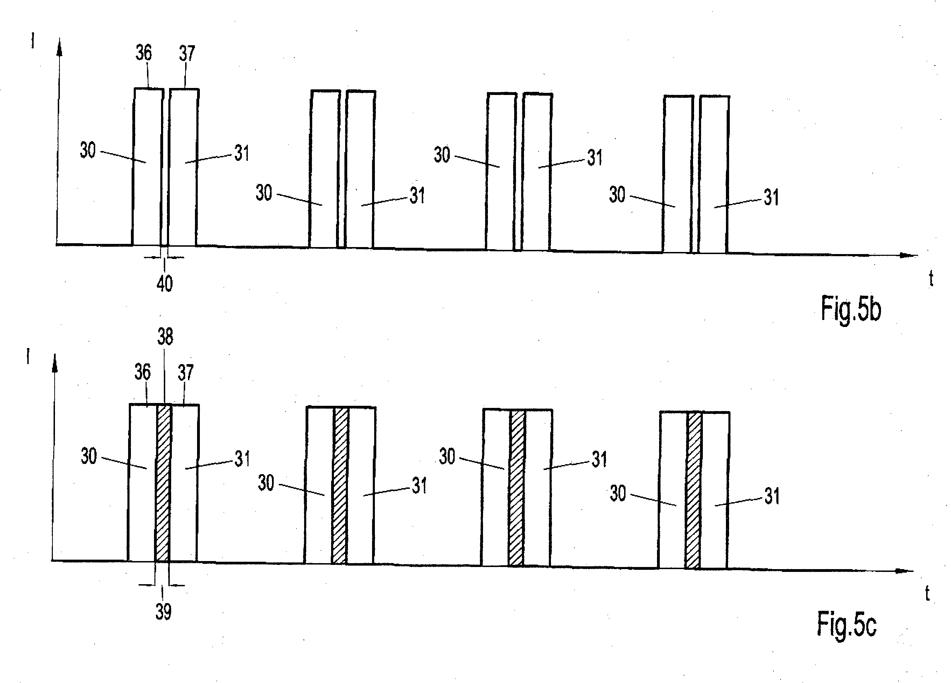

Fig. 5 zeigt eine weitere Ausführungsform eines Kontaktsensors 27 gemäß der Erfindung. In den Schleifstein 2 sind wenigstens drei Elektroden eingebettet, bestehend aus einer zentralen Elektrode 3, die analog wie unter Fig.2 beschrieben ausgeführt ist, einer vorlaufenden Elektrode 28 und einer nachlaufenden Elektrode 29. Alle Elektroden 3,28,29 liegen in einem Stromkreis 7 mit einer anliegenden Potentialdifferenz wie in Fig. 5a dargestellt. Die Elektroden 28 und 29 liegen in einer Parallelschaltung zueinander, wobei jede der beiden Elektroden 28 und 29 zugleich mit der zentralen Elektrode 3 in Reihe schaltbar sind.

Als Widerstände bzw. Anzeigeelemente sind Licht emittierende Dioden (LED) 32,33 in den vermaschten Stromkreisen eingebaut. Beide Stromkreise, der zwischen der zentralen Elektrode 3 und der voreilenden Elektrode 28 und der zwischen der zentralen Elektrode 3 und der nacheilenden Elektrode 29 sind mit einem Wischkontaktschalter 30 und 31 und zwar als Schließer ausgestattet. Die Funktion der als Schließer ausgeführten Wischkontaktschalter 30, 31, übernimmt wiederum das Häckselmesser 1 gemäß der Beschreibung unter Fig.2, d.h. die Kontakte werden durch den abrasiven Kontakt mit den vorbei gleitenden Häckselmessern 1 geschlossen und sobald diese Kontaktschließungen beendet sind werden die Wischkontaktschalter 30, 31 wieder geöffnet. Auch diese Schließ-und Öffnungszeiten der Wischkontaktschalter 30, 31 werden einer Auswerteeinheit 34 mitgeteilt und durch die Auswertung der Überlagerungszeiten dieser Kontaktschließungen werden Rückschlüsse auf den Schneidschärfezustand der Häckselmesser 1 gezogen und diese werden zur Visualisierung auf die Anzeigeeinheit 35 zur Information an den Fahrer in der Kabine weitergegeben.

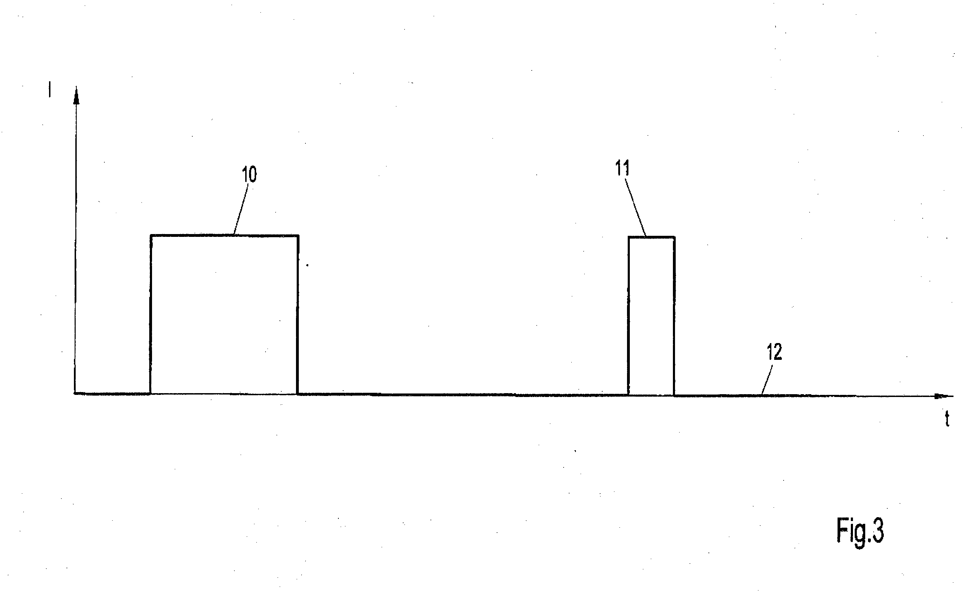

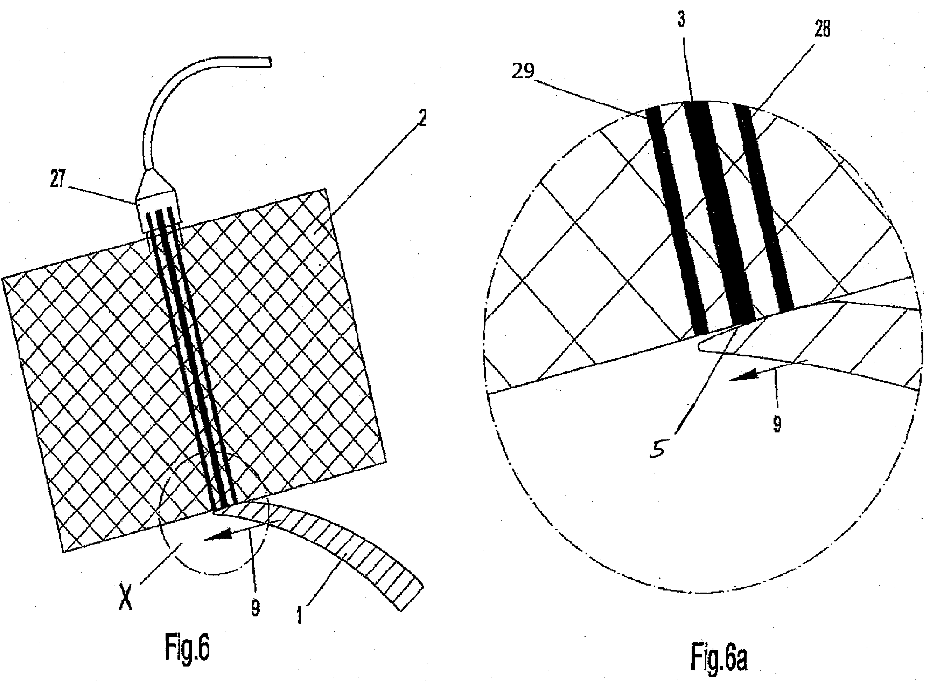

Fig.5b zeigt ein Beispiel für den zeitlichen Ablauf der Zeitdauer 36,37 der Schließung der Wischkontaktschalter 30,31 gemäß dem in Fig.6 und Fig.6a dargestellten Anwendungsbeispiel, wobei Fig.6a die Vergrößerung der Einzelheit X in Fig.6 darstellt. Fig.6 zeigt das Anwendungsbeispiel des Kontaktsensors 27 mit drei Elektroden gemäß Fig. 5, der mittleren Elektrode 3 und einer vorlaufenden Elektrode 28 und einer nachlaufenden Elektrode 29, die mit einem stark abgenutzten Häckselmesser 1 in Kontakt stehen. Der zeitliche Ablauf der dargestellten Situation in einem Diagramm gemäß Fig. 3 ist typisch für stark abgenutzte Schneidkanten 16 der Häckselmasser 1 einer Häckseltrommel. In Fig. 5b sind die Abfolgen der Zeitdauer 36,37 der Wischkontaktschalter 30,31 an vier nacheinander folgenden Häckselmessern 1 Im Laufe der Umdrehung einer Häckseltrommel 14 dargestellt. Zwischen der Schließzeitdauer 36 der vorlaufenden Elektrode 28 und der Schließzeitdauer 37 der nachlaufenden Elektrode 29 ergibt sich eine Zeitlücke 40 In der kein Strom fließt. Dieses ist auf die stark abgenutzte und gewölbte Messerfläche 5 zurück zu führen. Diese Zeltlücke 40 liefert der Auswerteeinheit 34 den klaren Hinweis, dass die Häckselmesser 1 stark abgenutzt sind und dass der Schleifvorgang dringendst durchgeführt werden soll. Die Anzeigeeinheit 34 signalisiert dieses dem Fahrer, z.B. durch Aufleuchten einer roten Leuchtdiode.

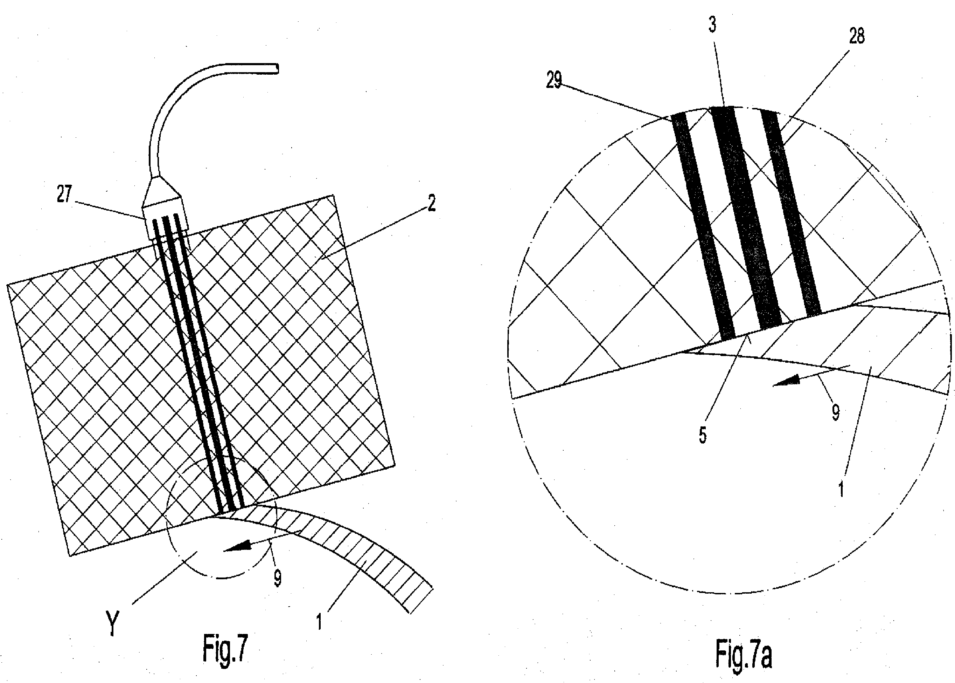

Fig.5c zeigt analog dem Beispiel gemäß Fig.5b den zeitlichen Ablauf der Schließzeitdauer 36,37 der Wischkontaktschalter 30,31 gemäß dem Ausführungsbeispiel in den Fig. 7 und Fig. 7a, wobei Fig. 7a die Vergrößerung der Einzeiheit gemäß Fig. 7 darstellt. Fig.7 zeigt ein Anwendungsbeispiel des Kontaktsensors 27 mit drei Elektroden, der mittleren Elektrode 3 und einer vorlaufenden Elektrode 28 und einer nachlaufenden Elektrode 29, die mit einem scharfen Häckselmesser 1 in Kontakt stehen. Der zeitliche Ablauf der dargestellten Situation in diesem Diagramm ist typisch für scharf geschliffene Schneidkanten 16 der Häckselmesser 1 einer Häckseltrommel. Dargestellt sind die Abfolgen der Schließzeitdauer 36,37 der Wischkontaktschalter 30,31 an vier nacheinander folgenden Häckselmessern 1 im Laufe der Umdrehung der Häckseltrommel 14. Zwischen der Schließzeitdauer 36 der vorlaufenden Elektrode 28 und der Schließzeitdauer 37 der nachlaufenden Elektrode 29 ergibt sich eine zeitliche Überlagerung 38, in der alle Elektroden 3,28,29 von Strom durchflossen werden. Dieses ist auf die exakt geschliffene und keineswegs abgenutzte Messerfläche 5 zurück zu führen. Diese zeitliche Überlagerung 38 liefert der Auswerteeinheit 34 den klaren Hinweis, dass die Häckselmesser 1 sich in einem scharfen Zustand befinden. Die Anzeigeeinheit 35 signalisiert dem Fahrer, z.B. durch Aufleuchten einer grünen Leuchtdiode, dass zurzeit keine Nachschärfung erforderlich ist.

Die Dauer der zeitlichen Überlagerung 38 geht mit zunehmender Abnutzung der Schneidkante 16 der Häckselmesser 1 gegen Null. Durch Festlegung eines minimalen Schwellenwertes für die Dauer der zeitlichen Überlagerung 38 gibt die Auswerteeinheit 34 den Steuerbefehl an die Anzeigeeinheit 35, nunmehr die gelbe Leichtdiode aufleuchten zu lassen, so dass der Fahrer die Information bekommt, den Nachschärfeprozess bzw. den Schleifvorgang der Häckselmesser 1 bei nächster Gelegenheit durchzuführen.

Auch die so ermittelten Schließ- und Öffnungszeiten der Wischkontaktschalter 30,31 werden somit der Auswerteeinheit 34 zugeführt und durch die Auswertung der Überlagerungszeiten 39 dieser Kontaktschließungen werden Rückschlüsse auf den Schneidschärfezustand der Häckselmesser 1 gezogen und diese werden zur Informationsgewinnung und Visualisierung auf die Anzeigeeinheit 35 angezeigt, so dass dem Fahrer in der Kabine diese Informationen zur Verfügung gestellt werden.

### Bezugszeichenliste

- 1: Häckselmessers
- 2: Schleifstein
- 3: Elektrode, Kontaktelektrode
- 4: Berührungspunkt
- 5: Messerfläche
- 6: Schneidenradius
- 7: Stromquelle, Stromkreis
- 8: Spannungsmessgerät
- 9: Richtung
- 10: Zeitdauer
- 11: Zeitdauer
- 12: Strom
- 13:
- 14: Häckseltrommel
- 15: Schleifvorrichtung
- 16: Schneidkante
- 17: Häckslergehäuse
- 18,18': Vorpresswalzen
- 19: Gegenschneide
- 20: Rotationsachse
- 21: Welle
- 22: Schleifringkörper
- 23: Stromabnehmer
- 24: Messanordnung
- 25,25': elektrische Leitungen
- 26: µ-Controller
- 27: Kontaktsensor
- 28: vorlaufende Elektrode
- 29: nachlaufende Elektrode
- 30: Wischkontaktschalter
- 31: Wischkontaktschalter
- 32: LED Licht emittierende Diode
- 33: LED Licht emittierende Diode
- 34: Auswerteeinheit
- 35: Anzeigeeinheit
- 36: Schließzeitdauer
- 37: Schließzeitdauer
- 38: Überlagerung
- 39: Überlagerungszeit
- 40: Zeitlücke

- U: Umlaufbewegung
- V: Potentialdifferenz (Spannung)

## Patentansprüche

1. Verfahren zur Erkennung der Schärfe von Schneidkanten (16) von Häckselmessern (1) an einer umlaufend angetriebenen Häckseltrommel (14) eines Feldhäckslers mit einer Gegenschneide (19) und einer Schleifvorrichtung (15) mit einem Schleifstein (2) zum Nachschärfen der Häckselmesser (1), **dadurch gekennzeichnet, dass** durch wenigstens eine Elektrode (3) als Kontaktsensor (27) eine hinter der Schneidkante (16) befindliche Messerfläche (5) zumindest eines Häckselmessers (1) abgetastet und die Kontaktdauer der wenigstens einen Elektrode (3) mit der Messerfläche (5) erfasst wird.

2. Verfahren nach Anspruch 1, **dadurch gekennzeichnet, dass** die wenigstens eine Elektrode (3) in axialer Richtung der Häckseltrommel (14) bewegt wird.

3. Verfahren nach einem der Ansprüche 1 oder 2, **dadurch gekennzeichnet, dass** die wenigstens eine Elektrode (3) und die Häckselmesser (1) an eine Stromquelle (7) angelegt werden und einen Stromkreis (7) bilden, der für die Dauer eines Kontaktes eines Häckselmessers (1) mit der Elektrode (3) geschlossen wird.

4. Verfahren nach Anspruch 3, **dadurch gekennzeichnet, dass** durch das Schließen des Stromkreises (7) ein Stromfluss stattfindet, dessen Zeitdauer (10,11) messtechnisch erfasst und diese Zeitdauer (10) als Eingangssignal einer Auswerteeinheit (34) zugeführt wird.

5. Verfahren nach Anspruch 1 bis 4, **dadurch gekennzeichnet, dass** die wenigstens eine Elektrode (3) von einem Strom durchflossen wird, dessen Dauer einen Bezug zur Schärfe der Schneidkante (16) hat und dieser Bezug als Information dem Fahrer zur Verfügung gestellt wird.

6. Verfahren nach einem der Ansprüche 4 oder 5, **dadurch gekennzeichnet, dass** die Messwerte für den Stromfluss und dessen Zeitdauer (10,11,36,37) als Eingangssignale einem µ-Coritroller (26) als Teil der Auswerteeinheit (34) zugeführt werden, und dessen Ausgangssignale dem Fahrer des Feldhäckslers Informationen über den Schärfezustand der Schneidkante (16) der Häckselmesser (1) vorgeben.

7. Verfahren nach einem der Ansprüche 4 oder 5, **dadurch gekennzeichnet, dass** die Messwerte Stromfluss und Zeitdauer (10,11) von einer Messanordnung (24) erfasst werden und einem µ-Controller (26) als Eingangssignale zugeführt werden und dessen Ausgangssignale zur Steuerung der Schleifvorrichtung (15) genutzt werden.

8. Vorrichtung zur Anwendung des Verfahrens nach einem der Ansprüche 1 bis 7 zur Erkennung der Schärfe von Schneidkanten (16) von Häckselmessern (1) an einer umlaufend angetriebenen Häckseltrommel (14) eines Feldhäcksiers mit einer Gegenschneide (19) und einer Schleifvorrichtung (15) mit zumindest einem Schleifstein (2) zum Nachschärfen der Häckselmesser (1), **dadurch gekennzeichnet, dass** die Vorrichtung wenigstens eine Elektrode (3) als Kontaktsensor (27) umfasst, der eine hinter der Schneidkante (16) befindliche Messerfläche (5) wenigstens eines Häckselmessers (1) abtastet.

9. Vorrichtung nach Anspruch 8, **dadurch gekennzeichnet, dass** die wenigstens eine Elektrode (3) in radialer Richtung verstellbar ist.

10. Vorrichtung nach einem der Ansprüche 8 oder 9, **dadurch gekennzeichnet, dass** die Elektrode (3) an wenigstens einem Schleifstein (2) der Schleifvorrichtung (15) angeordnet ist.

11. Vorrichtung nach einem der Ansprüche 8 bis 10, **dadurch gekennzeichnet, dass** die Vorrichtung eine Messanordnung (24) zur Erkennung der Schneidkantenschärfe von Häckselmessern (1) umfasst, die eine Stromquelle (7), die wenigstens eine Elektrode (3), die Häckselmesser (1) sowie ein Messgerät (8) aufweist.

12. Vorrichtung nach einem der Ansprüche 8 bis 11, **dadurch gekennzeichnet, dass** der Kontaktsensor (27) zwei Elektroden (3,28,29) aufweist, eine zentrale Elektrode (3), eine vorlaufende Elektrode (28) oder eine nachlaufende Elektrode (29).

13. Vorrichtung nach einem der Ansprüche 8 bis 11, **dadurch gekennzeichnet, dass** der Kontaktsensor (27) drei Elektroden (3,28,29) aufweist, eine zentrale Elektrode (3), eine vorlaufende Elektrode (28) und eine nachlaufende Elektrode (29).

14. Vorrichtung nach einem der Ansprüche 11 bis 13, **dadurch gekennzeichnet, dass** die Messanordnung (24) in Abhängigkeit vom Stromfluss im Stromkreis (7) die Zeitdauer (10,11,36,37) des geschlossenen Stromkreises (7) erfasst.

15. Vorrichtung nach einem der Ansprüche 11 bis 14, **dadurch gekennzeichnet, dass** die Messanordnung (24) eine Auswerteeinheit (34) mit einem µ-Controller (26) aufweist, dessen Eingangs- und Ausgangssignale genutzt werden, dem Fahrer Informationen über die Schneidkantenschärfe der Häckselmesser (1) zu generieren.

## Claims

1. A method of determining the sharpness of cutting edges (16) of chopping blades (1) on a rotationally driven chopping drum (14) of a forage harvester having a counterpart cutter (19) and a grinding device (15) having a grinding stone (2) for re-sharpening the chopping blades (1), **characterised in that** a blade surface (5) of at least one chopping blade (1), that is behind the cutting edge (16), is scanned by at least one electrode (3) as a contact sensor (27) and the contact duration of the at least one electrode (3) with the blade surface (5) is detected.

2. A method according to claim 1 **characterised in that** the at least one electrode (3) is moved in the axial direction of the chopping drum (14).

3. A method according to one of claims 1 and 2 **characterised in that** the at least one electrode (3) and the chopping blades (1) are applied to a current source (7) and form a circuit (7) which is closed for the duration of a contact of a chopping blade (1) with the electrode (3).

4. A method according to claim 3 **characterised in that** by closing the circuit (7) a flow of current takes place, the time duration (10, 11) of which is detected by measurement technology and said time duration (10) is fed as an input signal to an evaluation unit (34).

5. A method according to claims 1 to 4 **characterised in that** the at least one electrode (3) has a current flowing therethrough, the duration of which has a relationship with the sharpness of the cutting edge (16) and said relationship is made available to the driver as information.

6. A method according to one of claims 4 and 5 **characterised in that** the measurement values for the flow of current and the time duration (10, 11, 36, 37) thereof are fed as input signals to a µ-controller (26) as part of the evaluation unit (34) and the output signals of which provide the driver of the forage harvester with information about the sharpness condition of the cutting edge (16) of the chopping blades (1).

7. A method according to one of claims 4 and 5 **characterised in that** the measurement values flow of current and time duration (10, 11) are detected by a measuring arrangement (24) and fed to a µ-controller (26) as input signals and the output signals thereof are used for controlling the grinding device (15).

8. Apparatus for performing the method according to one of claims 1 to 7 for determining the sharpness of cutting edges (16) of chopping blades (1) on a rotationally driven chopping drum (14) of a forage harvester having a counterpart cutter (19) and a grinding device (15) having at least one grinding stone (2) for re-sharpening the chopping blades (1) **characterised in that** the apparatus includes at least one electrode (3) as a contact sensor (27) which scans a blade surface (5) of at least one chopping blade (1), that is behind the cutting edge (16).

9. Apparatus according to claim 8 **characterised in that** the at least one electrode (3) is displaceable in the radial direction.

10. Apparatus according to one of claims 8 and 9 **characterised in that** the electrode (3) is arranged at at least one grinding stone (2) of the grinding device (15).

11. Apparatus according to one of claims 8 to 10 **characterised in that** the apparatus has a measuring arrangement (24) for determining the cutting edge sharpness of chopping blades (1), which has a current source (7), the at least one electrode (3), the chopping blades (1) and a measuring device (8).

12. Apparatus according to one of claims 8 to 11 **characterised in that** the contact sensor (27) has two electrodes (3, 28, 29), a central electrode (3), a leading electrode (28) or a trailing electrode (29).

13. Apparatus according to one of claims 8 to 11 **characterised in that** the contact sensor (27) has three electrodes (3, 28, 29), a central electrode (3), a leading electrode (28) and a trailing electrode (29).

14. Apparatus according to one of claims 11 to 13 **characterised in that** the measuring arrangement detects the time duration (10, 11, 36, 37) of the closed circuit (7) in dependence on the flow of current in the circuit (7).

15. Apparatus according to one of claims 11 to 14 **characterised in that** the measuring arrangement (24) has an evaluation unit (34) with a µ-controller (26) whose input and output signals are used to generate information about the cutting edge sharpness of the chopping blades (1) for the driver.

## Revendications

1. Procédé pour détecter le tranchant d'arêtes de coupe (16) de couteaux de hachage (1) sur un rotor de hachage entraîné en rotation (14) d'une ensileuse, comprenant un contre-couteau (19) et un dispositif d'affûtage (15) avec une pierre à affûter (2) pour réaffûter les couteaux de hachage (1), **caractérisé en ce qu'**une surface de couteau (5) d'au moins un couteau de hachage (1) située derrière l'arête de coupe (16) est palpée au moyen d'au moins une électrode (3) servant de capteur de contact (27), et la durée de contact de la au moins une électrode (3) avec la surface de couteau (5) est déterminée.

2. Procédé selon la revendication 1, **caractérisé en ce que** la au moins une électrode (3) est déplacée dans la direction axiale du rotor de hachage (14).

3. Procédé selon une des revendications 1 ou 2, **caractérisé en ce que** la au moins une électrode (3) et les couteaux de hachage (1) sont reliés à une source de courant (7) et forment un circuit électrique (7) qui, pendant la durée d'un contact d'un couteau de hachage (1) avec l'électrode (3), est fermé.

4. Procédé selon la revendication 3, **caractérisé en ce que** la fermeture du circuit électrique (7) crée un flux de courant dont la durée (10, 11) est déterminée par voie métrologique et cette durée (10) est envoyée à une unité d'analyse (34) en tant que signal d'entrée.

5. Procédé selon la revendication 1 à 4, **caractérisé en ce que** la au moins une électrode (3) est parcourue par un courant dont la durée est en rapport avec le tranchant de l'arête de coupe (16) et ce rapport est fourni au conducteur à titre d'information.

6. Procédé selon une des revendications 4 ou 5, **caractérisé en ce que** les valeurs mesurées pour le flux de courant et sa durée (10, 11, 36, 37) sont envoyées en tant que signaux d'entrée à un microcontrôleur (26) qui fait partie de l'unité d'analyse (34) et dont les signaux de sortie sont transmis au conducteur de l'ensileuse à titre d'informations sur l'état de tranchant de l'arête de coupe (16) des couteaux de hachage (1).

7. Procédé selon une des revendications 4 ou 5, **caractérisé en ce que** les valeurs mesurées de flux de courant et de durée (10, 11) sont déterminées par un agencement de mesure (24) et envoyées en tant que signaux d'entrée à un microcontrôleur (26) dont les signaux de sortie sont utilisés pour commander le dispositif d'affûtage (15).

8. Dispositif pour appliquer un procédé selon une des revendications 1 à 7 pour détecter le tranchant d'arêtes de coupe (16) de couteaux de hachage (1) sur un rotor de hachage entraîné en rotation (14) d'une ensileuse, comprenant un contre-couteau (19) et un dispositif d'affûtage (15) avec au moins une pierre à affûter (2) pour réaffûter les couteaux de hachage (1), **caractérisé en ce que** le dispositif comprend au moins une électrode (3) servant de capteur de contact (27), lequel palpe une surface de couteau (5) d'au moins un couteau de hachage (1) située derrière l'arête de coupe (16).

9. Dispositif selon la revendication 8, **caractérisé en ce que** la au moins une électrode (3) est réglable dans la direction radiale.

10. Dispositif selon une des revendications 8 ou 9, **caractérisé en ce que** l'électrode (3) est disposée au moins sur une pierre à affûter (2) du dispositif d'affûtage (15).

11. Dispositif selon une des revendications 8 à 10, **caractérisé en ce que**, pour détecter le tranchant d'arêtes de coupe de couteaux de hachage (1), le dispositif comprend un agencement de mesure (24) qui comporte une source de courant (7), la au moins une électrode (3), les couteaux de hachage (1) ainsi qu'un appareil de mesure (8).

12. Dispositif selon une des revendications 8 à 11, **caractérisé en ce que** le capteur de contact (27) comprend deux électrodes (3, 28, 29), une électrode centrale (3), une électrode antérieure (28) ou une électrode postérieure (29).

13. Dispositif selon une des revendications 8 à 11, **caractérisé en ce que** le capteur de contact (27) comprend trois électrodes (3, 28, 29), une électrode centrale (3), une électrode antérieure (28) et une électrode postérieure (29).

14. Dispositif selon une des revendications 11 à 13, **caractérisé en ce que** l'agencement de mesure (24) détermine la durée (10, 11, 36, 37) du circuit électrique fermé (7) en fonction du flux de courant dans le circuit électrique (7).

15. Dispositif selon une des revendications 11 à 14, **caractérisé en ce que** l'agencement de mesure (24) comporte une unité d'analyse (34) avec un microcontrôleur (26) dont les signaux d'entrée et de sortie sont utilisés pour fournir au conducteur des informations sur le tranchant d'arêtes de coupe des couteaux de hachage (1).
